# EUROPEAN PATENT APPLICATION

(11) **EP 3 900 856 A1**
(43) Date of publication of application: **27.10.2021**
(21) Application number: 20171310.4
(22) Date of filing: 24.04.2020
(51) Int. Cl.: B22F 1/00, B22F 1/02, B22F 3/105, B33Y 10/00, B33Y 70/00, C22C 1/05, C22C 33/02, C22C 38/02, C22C 38/44, C22C 38/58, B22F 3/00

(54) **ADDITIVE MANUFACTURING POWDERS FOR USE IN ADDITIVE MANUFACTURING PROCESSES RESULTING IN IMPROVED STABILITY OF STEEL MELT-TRACK**

(71) Applicant: Technische Universität Graz, 8010 Graz (AT)
(72) Inventor: Skalon, Mateusz, 8010 Graz (AT); Gruberbauer, Andreas, 4030 Linz (AT); Sommitsch, Christof, 8750 Judenburg (AT)
(74) Representative: Patentanwaltskanzlei Matschnig & Forsthuber OG

(57) **Abstract**

The present invention relates to an additive manufacturing powder for use in additive manufacturing of three dimensional objects by means of a heat source, wherein the additive manufacturing powder comprises or consists of: a steel powder comprising steel powder particles, wherein the steel powder is selected from the group consisting of AISI 316 stainless steel powders, AISI 316L stainless steel powders, and combinations thereof; and a secondary powder comprising secondary powder particles, wherein the secondary powder is selected from the group consisting of elemental silicon powder, elemental molybdenum powder, elemental manganese powder, elemental chromium powder, elemental nickel powder and combinations thereof; wherein the secondary powder particles are bound to the surface of the steel powder particles. The present inventions also relates to the use of these powders as well as to methods for producing and using the same.

## Description

The present invention relates to additive manufacturing metal powders for use in additive manufacturing of three dimensional objects by means of a heat source. The present invention also relates to methods for preparing such additive manufacturing metal powders and uses of such powders. Furthermore, the present invention relates to powder-based additive manufacturing processes using said additive manufacturing powders.

Laser Powder Bed Fusion (LPBF) is a well-known manufacturing method of 3-dimensional objects by means of selective melting of a powder layer by a laser beam. Parts of complex shapes may be produced directly in a single process by layer-wise solidification of selectively molten metal. This process is described in detail for example in T. Syvanen et al., New Innovations in Direct Metal Laser Sintering Process -A Step Forward in Rapid Prototyping and Manufacturing, Laser Materials Processing, Vol. 87, 1999, p. 68 to and in Igor Yadroitsev, Selective laser melting: Direct manufacturing of 3D-objects by selective laser melting of metal powders Publisher: LAP Lambert Academic Publishing, Editor: LAP Lambert Academic Publishing, ISBN: 3838317947.

In industry, especially industries focused on reduction of component mass like aviation and high-end automotive there is a big and growing interest in powder-based additive manufacturing. Often there is also a need of applying LPBF to well-known materials having specific properties, e.g. steels. Examples of well-known conventional steels are e.g. AISI 316L (US designation) corresponding to 1.4404 European designation or AISI 316 (1.4401). These grades of steel in powdered form can be processed by laser sintering to produce metal parts with good quality. Said steel grades have already been used for laser sintering or laser melting earlier. Often, in individual industrial applications the printed component is of highly complex shape. It is commonly known that, when a surface is printed below a certain critical leaning angle, it has be supported with support structures [e.g. Fox et al., Procedia CIRP 45 (2016(131 -134, doi: 10.1016/j.procir.2016.02.347]. The support structures have to be removed after the manufacturing process what limits the freedom of design and causes unnecessary costs. The procedure of placing and removing support structures was described e.g. in B. Denkena et al., Procedia Manufacturing 18 (2018) 50-57, DOI: 10.1016/j.promfg.2018.11.007. The support structures may further be divided into two applications: a) stabilizing the printed part on a printing plate; b) serving as a solidification plane for the next layer of molten material. The application b) is necessary due to the melt-track instability when heavily leaned surfaces are printed (usually under a leaning angle of 40° in respect to a horizontal plane). Without stabilization the quality of said surface would decrease with decreasing angle and would be highly porous.

The problem of decreasing quality of a downskin was already addressed in many publications where modification of laser-beam parameters was suggested.

WO2018210436 A1 describes the optimization of the energy input in the downskin during printing of the downskin in order to decrease the amount of supports needed.

Another approach is to minimize the effort of removing the support structures as e.g. previously described in US2019178086 A1 and WO2019113104 A1. In these publications, methods for minimizing the effort of removing support structures is described. In both cases the need of printing of excessive supporting structures remains unsolved and limits the freedom of design and increases the production costs through elongating the printing process.

Another approach is based on the modification of the powdered feedstock material which is used in the additive manufacturing process. US20090047165A1 describes metal powders for use in an additive method for the production of three-dimensional objects and methods using such metal powders, wherein the gas atomized powder is either in pre-alloyed form or comprises of blend of separate elements. The powders and methods described therein, however, do not solve the above-described problem of supporting.

It is an object of the present invention to provide improved additive manufacturing metal powders which can be processed by laser sintering or similar additive manufacturing methods using a heat source and whereby the three dimensional objects produced in such methods have similar properties compared to those of a three dimensional metal object that is produced using a conventional manufacturing method. Specifically, it is an object of the present invention to provide novel additive manufacturing powders showing improved properties with regard to the stabilisation of the melt-track during the printing process of three dimensional metal objects, wherein a significantly reduced amount of support structures are required.

The above-mentioned objects are met by the present invention. In a first aspect, the present invention relates to additive manufacturing metal powders for use in additive manufacturing of three dimensional objects by means of a heat source, wherein the additive manufacturing powder comprises or consists of:
- a steel powder comprising steel powder particles, wherein the steel powder is selected from the group consisting of AISI 316 stainless steel powders, AISI 316L stainless steel powders, and combinations thereof; and
- a secondary powder comprising secondary powder particles, wherein the secondary powder is selected from the group consisting of elemental silicon powder, elemental molybdenum powder, elemental manganese powder, elemental chromium powder, elemental nickel powder and combinations thereof;
wherein the secondary powder particles are bound to the surface of the steel powder particles.

The invention is based on the surprising finding that additive manufacturing powders according to the invention provide for a significantly improved stability of the melt-track during additive manufacturing of three dimensional metal objects. This beneficial technical effect is demonstrated and evidenced by the experimental data given in the experimental chapter below. An improved stability of the melt-track results in a shorter and more cost-efficient production of three-dimensional objects, since the thickness of the powder layer can be increased, the speed of the laser spot can be increased and the number of supporting structures can be decreased.

The present invention opens a wide range of applications for laser melting and other additive processes using a heat source. For example, the present invention is suitable for many different kinds of additive manufacturing processes, including but not limited to, the already above-described method of Laser Powder Bed Fusion (LPBF) being a well-known manufacturing method of 3-dimensional objects by means of selective melting of a powder layer by a laser beam (see e.g. Oleg D. Neikov, Chapter 13 - Powders for Additive Manufacturing Processing, Editor(s): Oleg D. Neikov, Stanislav S. Naboychenko, Nikolay A. Yefimov, Handbook of Non-Ferrous Metal Powders (Second Edition), Elsevier, 2019, Pages 373-399, ISBN 9780081005439, https://doi.org/10.1016/B978-0-08-100543-9.00013-0). Other processes to be mentioned are, for example, an electron beam melting process (see e.g. Yoshiki Oshida, 10 - Fabrication Technologies, Editor(s): Yoshiki Oshida, Bioscience and Bioengineering of Titanium Materials (Second Edition), Elsevier, 2013, Pages 303-340, ISBN 9780444626257, https://doi.org/10.1016/B978-0-444-62625-7.00010-8), direct metal deposition (A.J. Pinkerton, 16 - Laser direct metal deposition: theory and applications in manufacturing and maintenance, Editor(s): J. Lawrence, J. Pou, D.K.Y. Low, E. Toyserkani, In Woodhead Publishing Series in Welding and Other Joining Technologies, Advances in Laser Materials Processing, Woodhead Publishing, 2010, Pages 461-491, ISBN 9781845694746, https://doi.org/10.1533/9781845699819.6.461), a diode beam melting process (Miguel Zavala-Arredondo, Nicholas Boone, Jon Willmott, David T.D. Childs, Pavlo Ivanov, Kristian M. Groom, Kamran Mumtaz, Laser diode area melting for high speed additive manufacturing of metallic components, Materials & Design, Volume 117, 2017, Pages 305-315, ISSN 0264-1275, https://doi.org/10.1016/j.matdes.2016.12.095), and a binder jettingbinder jetting process (Michael Zenou, Lucy Grainger, 3 - Additive manufacturing of metallic materials, Editor(s): Jing Zhang, Yeon-Gil Jung, Additive Manufacturing, Butterworth-Heinemann, 2018, Pages 53-103, ISBN 9780128121559, https://doi.org/10.1016/B978-0-12-812155-9.00003-7). The aforementioned additive manufacturing processes are well-known in the art.

The invention creates the possibility of manufacturing steel components with overhang surfaces via layer-wise additive manufacturing using a heat source (e.g. LPBF) with a reduced amount of support structures or even no support structures at all, and without the need of modifying the conventionally applied process parameters such as laser power, laser spot speed, hatching distance, layer thickness etc.

In view of the above, the term "additive manufacturing by means of a heat source" as used herein refers to additive manufacturing processes in which a layer-wise heat melting of an additive manufacturing powder is applied, for example, by using a heat beam or a focus beam, e.g. a laser beam.

The steel powders used in the present invention are selected from the group of AISI 316 stainless steel powders, AISI 316L stainless steel powders, and combinations thereof. These stainless steel powders are well known and widely used for many different applications. The chemical compositions of the 316 and 316L steel powders suitable for working the present invention are given in Table 1 and Table 2, indicating the minimum and maximum concentrations in weight percent of the chemical elements present in the steel powders (Min. conc. Wt %: minimal concentration in weight percent; Max. conc. Wt %: maximal concentration in weight percent).

**Table 1: Chemical composition of a steel particle based on AISI 316L**

| Element | Cr | Ni | Mn | Si | C | Mo | S | P |
|---|---|---|---|---|---|---|---|---|
| Min. conc. wt % | 14,5 | 8.5 | - | - | - | 0,5 | - | - |
| Max. conc. wt % | 18,0 | 13.0 | 3,0 | 1.0 | 0.03 | 3,0 | 0.03 | 0.045 |

**Table 2: Chemical composition of a steel particle based on AISI 316**

| Element | Cr | Ni | Mn | Si | C | Mo | S | P |
|---|---|---|---|---|---|---|---|---|
| Min. conc. wt % | 14,5 | 8.5 | - | - | - | 0,5 | - | - |
| Max. conc. wt % | 18,0 | 13.0 | 3,0 | 1.0 | 0.07 | 3,0 | 0.03 | 0.045 |

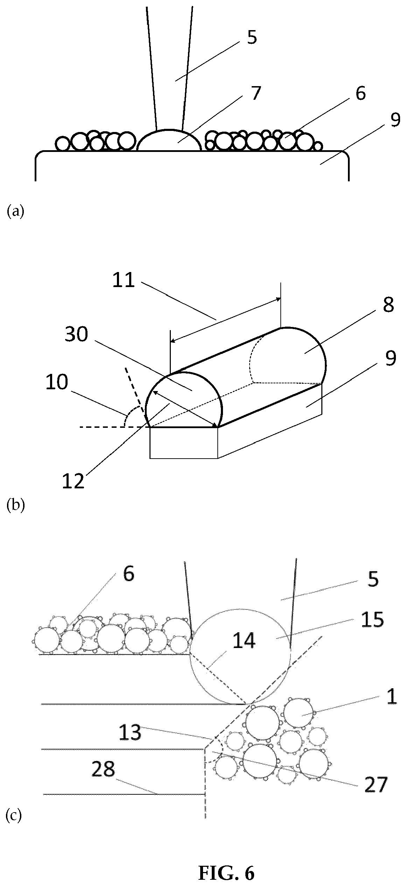

The secondary powder used in the present invention comprises secondary powder particles which are bound to the surface of the steel powder particles. The additive manufacturing powder according to the present invention being characterized by AISI 316/316L-based steel powder particles having secondary powder particles bound to their surface may be obtained by different methods. Preferably, the secondary powder particles are bound to the steel powder particles' surface by means of a diffusion bonding process (also referred to as diffusion welding) which is a widely-used solid-state welding technique. Binding the secondary powder particles to the surface of the steel particles is particularly useful for the present invention, because: i) it prevents segregation of the secondary particles and the primary carrier particles; ii) it prevents the unwanted movement of secondary particles caused by turbulent gas-flow caused by heat-source heating the powder bed iii) it allows to keep the secondary particles at the surface what allows to change the characteristics of the steel particle surface. The diffusion bonding in this case relies on two consequent stages: i) in the first stage the secondary particles stick to the steel particles due to adhesive forces induced by the size of the secondary particles (<1µm) and ii) in the second stage the temperature is being elevated causing activation of the diffusion between steel- and secondary particles. In a case when secondary particles are larger than 1µm then nickel particles (<1µm) are added as intermediate binding agent proving bonding between steel-and secondary particles. The diffusion bonding process as used in the present invention is described in more detail below (see Fig. 6). Another, but less preferred method for binding the secondary powder particles to the surface of the steel powder particles is mixing the steel powder particles with secondary powder particles having a particle size of up to 1 µm; that is, secondary powder particles having a size of 1 µm or less adhere to the surface of the steel powder particles upon mixing the powders. Further examples suitable methods of binding secondary powder particles to the surface of the steel powder particles may be the heating of the powder mixture in a heating chamber, whereby binding of the secondary powder particles to the surface of the steel particles is effected; or alternatively spraying the secondary particles onto the stream of drops of molten metal in a gas atomisation process; or alternatively by heating the mixture of steel- and secondary particles by means of laser beam; or alternatively by heating up the powder blend by means of electric current or magnetic field or microwaves.

As per the invention, the secondary powder comprises secondary powder particles, wherein the secondary powder is selected from the group consisting of elemental silicon powder, elemental molybdenum powder, elemental manganese powder, elemental chromium powder, elemental nickel powder and combinations thereof. As per the inventor's observation, without wished to be bound to a certain theory, the surface-bound secondary powders have specific properties having a beneficial effect on the melt-track stability when using the powders of the invention during additive manufacturing. For example, silicon increases the contact angle of the molten steel via reducing all the oxides due to its high affinity to oxygen promoting in this way larger contact line of a melt-pool and locally creates low-melting silicon-rich eutectic liquid phase increasing wetting; in combination, these effects of silicon allow for quicker outflow of the heat, thus, allowing quicker solidification of the melt-pool what increases its stability. Chromium increases the contact angle of the steel particle surfaces via reducing all the oxides due to its high affinity to oxygen, thus, promoting in this way a larger contact line of a melt-pool. Molybdenum serves as inoculant promoting quick solidification due to its high melting temperature. Manganese creates a low-melting liquid phase which enables more effective heat outflow promoting quicker solidification of a melt-pool. Nickel is a useful bonding means for joining the steel particles with secondary particles of silicon, chromium, molybdenum, and manganese.

The secondary powder particles may have a spherical, irregular, cuboidal, blocky, elongated, flake and/or other similar particulate shape.

In certain embodiments, the secondary powder is selected from the group consisting of: elemental silicon powder, elemental manganese powder, elemental chromium powder, and elemental molybdenum powder. In these embodiments, one single species of secondary powder particles is bound to surface of the steel powder particles.

In certain embodiments, the secondary powder is selected from the group consisting of: a combination of elemental nickel powder and elemental silicon powder having a particle size of 0.5 µm - 3µm or of 3 µm - 10 µm, a combination of elemental nickel powder and elemental molybdenum powder having a particle size of 3.0 µm - 10 µm, a combination of elemental nickel powder and elemental manganese powder having a grain size of 1.0 µm - 10.00 µm, and a combination of elemental manganese powder having a grain size of 1.0 µm - 10.00 µm and elemental silicon powder having a grain size of 0.5 µm - 3µm; and, wherein the elemental nickel powder has a particle size of up to 1.0 µm and is present in an amount of up to 1.5 wt-%, preferably up to 1.0 wt-%, based on the total weight of the additive manufacturing powder. In these embodiments, the nickel particles serve as a bonding means for joining ("glueing") the steel particles with secondary powder particles of silicon, chromium, molybdenum, and manganese. Preferably, the secondary powder particles are bound to the surface of the steel powder particles by means of diffusion bonding. For example, in embodiments, the secondary powder is a combination of elemental nickel particles (max. 1.5 wt % based on the total weight of the additive manufacturing powder, particle size max. 1.0 µm, purity min 95 %) and one or more of the following:
- 0.1 - 1.0 wt % of silicon particles, based on the total weight of the additive manufacturing powder, silicon particle size from 0.5 µm - 3 µm (average particle size of e.g. about 1 µm), purity min 95 %;
- 0.1 - 1.0 wt % of silicon particles, based on the total weight of the additive manufacturing powder, silicon particle size from 3 µm -10 µm (average particle size of e.g. about 5 µm) of purity min 95 %;
- 0.1-1.5 wt % of molybdenum particles, based on the total weight of the additive manufacturing powder, molybdenum particle size from 3.0 µm -10 µm (average particle size of e.g. about 5 µm), purity min 95 %;
- 0.2-1.5 wt % of chromium particles, based on the total weight of the additive manufacturing powder, chromium, particle size from 1.0 µm -10.0 µm (average particle size of e.g. about 3 µm) of purity min 95 %;
- 0.2-1.5 wt % of manganese particles, based on the total weight of the additive manufacturing powder, manganese particle size from 1.0 µm - 10.0 µm (average particle size of e.g. about 5 µm) of purity min 95 %.

Unless otherwise defined, the expression "particle size from X µm - Y µm" means that particles in a size ranging from X µm to Y µm are present in the secondary powder. The expression "average particle size of about Z µm" defines the average size of the particles present in the secondary powder. For example, an elemental silicon powder with silicon particles having a "silicon particle size from 0.5 µm to 3 µm" and an "average particle size of about 1 µm" means that the minimum particle size of the particles present in the elemental silicon powder is about 0.5 µm and the maximum particle size of the particles present in the elemental silicon powder is about 3 µm, and wherein the average particle size of the silicon particles is about 1 µm. The minimum and maximum sizes of the powder particles present in the secondary powder are the important parameters. The minimum and maximum particle sizes as well as the average particle size may be determined by e.g. scanning electron microscopy.

In certain embodiments the secondary powder is selected from the group consisting of: elemental silicon powder having a particle size of up to 1.0 µm, elemental manganese powder having a particle size of up to 1.0 µm, elemental chromium powder having a particle size of up to 1.0 µm, and elemental molybdenum powder having a particle size of up to 1.0 µm, or combinations thereof. Thus, in these embodiments, secondary powders consisting of particles having a size of 1 µm or less are used. Also combinations (blends) of these secondary powder particles may be used. In a preferable embodiment, the additive manufacturing powder is obtained by a diffusion bonding process and the secondary powder is selected from the group consisting of: elemental silicon powder having a particle size of up to 1.0 µm, elemental manganese powder having a particle size of up to 1.0 µm, elemental chromium powder having a particle size of up to 1.0 µm, and elemental molybdenum powder having a particle size of up to 1.0 µm. In another embodiment, which is also suitable, but less preferred, the additive manufacturing powder is obtained by mixing the steel powder particles with the secondary powder particles, wherein the secondary powder is selected from the group consisting of: elemental silicon powder having a particle size of up to 1.0 µm, elemental manganese powder having a particle size of up to 1.0 µm, elemental chromium powder having a particle size of up to 1.0 µm, and elemental molybdenum powder having a particle size of up to 1.0 µm. The above-mentioned embodiment using diffusion bonding, in which the secondary particles are firmly attached to the steel powder particles' surface, is preferred to the embodiment applying the simple mixing of the powders, in which the secondary particles adhere to the steel powder particles surface via adhesive forces. Diffusion bonding prevents blend segregation during use of the powder and prevents dislocation of the secondary particles during dur to turbulent flow of the gas around the melt-pool during the 3D printing process.

For example, in preferred embodiments, the secondary powder particles are attached directly by diffusion bonding to the surfaces of the steel powder particles (AISI 316 / AISI 316L) in an amount, as per one of the following:
- 0.1-0.4 wt % of silicon particles, based on the total weight of the additive manufacturing powder, silicon particle size up to 1.0 µm of purity min 95 %;
- 0.1-1.5 wt % of molybdenum particles, based on the total weight of the additive manufacturing powder, molybdenum particle size up to 1.0 µm of purity min 95 %;
- 0.2-1.5 wt % of chromium particles, based on the total weight of the additive manufacturing powder, chromium, particle size up to 1.0 µm of purity min 95 %;
- 0.2-1.5 wt % of manganese particles, based on the total weight of the additive manufacturing powder, manganese particle size up to 1.0 µm of purity min 95 %.
- Also combinations (blends) of the above listed secondary powder particles may be used.

Preferably, the secondary powder (by weight percent [wt-%]) is present in the additive manufacturing powder in an amount, as per the following:
- elemental silicon powder being present in an amount from 0.1 wt-% up to 1.0 wt-%, preferably up to 0.3 wt-%, based on the total weight of the additive manufacturing powder;
- elemental molybdenum powder being present in an amount from 0.1 wt-% up to 1.5 wt-%, preferably up to 1.0 wt-%, based on the total weight of the additive manufacturing powder;
- elemental nickel powder being present in an amount of up to 1.5 wt-%, preferably up to 1.0 wt-%, based on the total weight of the additive manufacturing powder;
- elemental chromium powder being present in an amount from 0.2 wt-% up to 1.5 wt-%, preferably up to 1.0 wt-%, based on the total weight of the additive manufacturing powder;
- the elemental manganese powder being present in an amount from 0.2 wt-% up to 1.5 wt-%, preferably up to 1.0 wt-%, based on the total weight of the additive manufacturing powder.

Preferably, the overall chemical composition of the additive manufacturing powder (i.e. summarized chemical composition of steel powder and secondary powder) is one of the following:
- iron and the following components by weight percent (wt-%), based on the total weight of the additive manufacturing powder: chromium: 16.0-19.5 wt-%, nickel: 10.0-14.5 wt-%, manganese: up to 4.5 wt-%, silicon: up to 2.0 wt-%, molybdenum: 2.0-4.5 wt-%, carbon: up to 0.03 wt-%, sulphur: up to 0.03 wt-%, phosphorus: up to 0.045 wt-%; (additive manufacturing powder according to the invention based on AISI 316L stainless steel particles)
or
- iron and the following components by weight percent (wt-%), based on the total weight of the additive manufacturing powder: chromium: 16.0-19.5 wt-%, nickel: 10.0-14.5 wt-%, manganese: up to 4.5 wt-%, silicon: up to 2.0 wt-%, molybdenum: 2.0-4.5 wt-%, carbon: up to 0.07 wt-%, sulphur: up to 0.03 wt-%, phosphorus: up to 0.045 wt-%. (additive manufacturing powder according to the invention based on AISI 316 stainless steel particles)

The above overall chemical composition of the additive manufacturing powders according to the invention is also given in Table 3 and Table 4:

**Table 3: Overall chemical composition of an additive manufacturing powder according to the invention based on AISI 316L stainless steel particles**

| Element | Cr | Ni | Mn | Si | C | Mo | S | P |
|---|---|---|---|---|---|---|---|---|
| Min. conc. wt % | 16.0 | 10.0 | - | - | - | 2.0 | - | - |
| Max. conc. wt % | 19.5 | 14.5 | 4.5 | 2.0 | 0.03 | 4.5 | 0.03 | 0.045 |

**Table 4: Overall chemical composition of an additive manufacturing powder according to the invention based on AISI 316L stainless steel particles**

| Element | Cr | Ni | Mn | Si | C | Mo | S | P |
|---|---|---|---|---|---|---|---|---|
| Min. conc. wt % | 16.0 | 10.0 | - | - | - | 2.0 | - | - |
| Max. conc. wt % | 19.5 | 14.5 | 4.5 | 2.0 | 0.07 | 4.5 | 0.03 | 0.045 |

In preferred embodiments, the secondary powder particles may have the following particle sizes [µm] and purity [%]:
- elemental silicon powder particles from 0.2 µm - 1.0 µm; purity of at least 95 %
- elemental silicon powder particles from 0.5 µm - 3.0 µm; purity of at least 95 %
- elemental silicon powder particles from 3.0 µm - 10.0 µm; purity of at least 95 %
- elemental molybdenum powder particles from 0.4 µm - 6.0 µm; purity of at least 95 %
- elemental molybdenum powder particles from 3 µm - 10.0 µm; purity of at least 95 %
- elemental manganese powder particles form 0.2 µm - 1.0 µm; purity of at least 95 %
- elemental manganese powder particles from 1.0 µm - 10.0 µm; purity of at least 95 %
- elemental chromium powder particles from 0.2 µm -1.0 µm; purity of at least 95 %
- elemental chromium powder particles from 1.0 µm - 10.0 µm; purity of at least 95 %
- elemental nickel powder particles from 0.4 µm - 1.0 µm; purity of at least 95 %.
- Also combinations (blends) of the above listed secondary powder particles may be used.

Preferably, the steel powder particles have a spherical or nearly spherical shape with an aspect ratio in a range 0.5-1.0, preferably with an aspect ratio in a range of 0.7 - 1.0. Preferably, the steel powder particles have a median particle size d50 of between 20 µm and 100 µm.

Preferably, the steel powder consists of one or more 316L stainless steel powders. Where AISI 316L steel is used preferably for applications which require superior corrosion resistance, which cannot be fulfilled by AIS 316 due to its higher carbon content.

In another aspect, the present invention relates to a powder-based additive manufacturing process for the production of three dimensional objects by using heat, the process comprising the steps of (a) providing an additive manufacturing powder as defined and disclosed herein, and (b) forming a composite three dimensional object by layer-wise heat melting and solidifying the additive manufacturing powder in an additive manufacturing apparatus.

It is important to note that in the additive manufacturing process according to the present invention, the additive manufacturing powders as described herein are directly used as a feedstock material. The additive manufacturing powders are not pre-alloyed, since powders with pre-alloyed components do not solve the problem solved by the present invention; specifically, with pre-alloyed powders, the goal of increasing the stability of the melt-track during additive manufacturing cannot be achieved.

In preferred embodiments, the process comprises the support-reduced forming of said composite three dimensional objects at a leaning angle between 90 degrees and 40 degrees or less, preferable at a leaning angle between 90 degrees and 20 degrees in respect of the printing plane.. The expression "support-reduced forming" as used herein, means that a reduced amount of support structures are used in comparison to conventional additive manufacturing processes in which leaning angles between 90 degrees and 20 degrees are applied. Using an additive manufacturing powder according to the present invention allows for reducing the amount of support structure by extending the range of the leaning angle under which a leaned surfaces of a steel product may be printed without placing the support structure beneath, resulting in no deformation or negative impact with respect to the steel product's design. The present invention allows to reduce the surface area that has to be supported and limits the support only to those areas leaned under 20 degrees. This beneficially extends the range of leaning angle relatively by 55% (from 45 degrees to 70 degrees; 35 degrees of increase). By way of giving an example: basically, the support that is needed during additive manufacturing of a steel product is strongly dependent on the design. For example, for a surface leaned at 35 degrees, such surface needs to be supported in its entirety, i.e. on 100% of the leaned surface, when using conventionally used additive manufacturing powders. When using an additive manufacturing powder according to the present invention, no support at all is needed at 35 degrees (except the support that is holding the sample to the printing plate). When printing the surface at a leaning angle under 20 degrees then for both conventional powders and powders according to the invention, the leaned surface has to be supported on 100% of the surface area. In case of a curvature that changes the leaning angle in a linear way from e.g. 20-60 degrees, then with additive manufacturing powders according to the invention, no support is needed; in contrast thereto, a support between leaning angles of 20-45 degrees is necessary, when using conventional additive manufacturing powders. Preferably, the process according to the invention comprises the support-reduced forming of said composite three dimensional objects at a leaning angle between 90 degrees and 40 degrees or less, preferable at a leaning angle between 90 degrees and 20 degrees in respect of the printing plane.

In certain embodiments, the additive manufacturing includes a process selected from the group consisting of: a powder-based laser melting process, an electron beam melting process, direct melting deposition, a diode beam melting process, a binder jetting process (see description of these processes above).

In another aspect, the present invention relates to a diffusion bonding method for preparing an additive manufacturing powder having the secondary powder particles bound to the surface of the steel powder particles, as described and defined herein, wherein the method comprises the consecutive steps a) to f) of:
Step a): Providing a steel powder as described and defined herein and providing a secondary powder as described and defined herein.
Step b): Mixing the steel powder with the secondary powder to obtain a powder mixture.
Step c): Preparing a powder bed of the powder mixture. Typically the density of the powder mixture in the powder bed is around 3.8 g/cm³ to 4.4 g/cm³. Statistically, the maximum powder bed density in a Gauss distribution for a spherical powder would be 5.12 g/cm³. The higher the density value the better the quality of the AISI 316 or AISI 316L steel powder that is used as a base/carrier powder for the secondary powder particles. The thickness of the powder bed depends on the steel powder that is used, the secondary powder particles that are to be bonded and the temperature, and, thus, can vary accordingly. It is within the general knowledge of the skilled person to choose a suitable thickness of the powder bed without undue burden, e.g. by appropriate routine tests. Typically, powder bed thickness will range from 2 mm to 120 mm. In the experimental tests, the inventor performed, powder bed thicknesses from 8 mm up to 80 mm led to successful binding of secondary powder particles to the surface of the steel particles.
Step d): Heat treating the powder mixture in form of the powder bed under inert atmosphere or vacuum and in a temperature range between the temperature of activation of the diffusion between the steel powder particles and the secondary particles and activation of diffusion among the secondary particles for a period of time long enough to effect formation of diffusion bonding, wherein a heat-treated powder mixture comprising an additive manufacturing powder having the secondary powder particles bound to the surface of the steel powder particles is obtained. Heating rates depend on the size of the furnace to be used and, typically, are in a range of between 2°C/min to 20 °C/min; for example, in industrial furnaces heating rates of about 5°C/min are typically applied. Heating rates of below 2°C/min would take too much time and heating rates greater than 20°C/min require too much power and only a small batch of powder can be processed at once, thus, the process at heating rates higher than 20°C/min would be too expensive. As regards the temperature range between the temperature of activation of the diffusion between the steel powder particles and the secondary particles and activation of diffusion among the secondary particles for a period of time long enough to effect formation of diffusion bonding, the temperature range depends on the following parameters: i) type/element of the secondary particle; ii) size of the secondary particle. Typically, the temperature ranges between 600°C and 1200°C, preferably between 700°C and 1150°C. As regards the "period of time long enough to effect formation of diffusion bonding", the isothermal temperature that is maintained in said period of time for effecting formation of diffusion bonding is typically between 0 - 20 min. It is within the general knowledge of the skilled person to determine the appropriate period of time, e.g. by routine testing.
Step e): Cooling the heat-treated powder mixture obtained in step d). Cooling may be performed by means of inert gasses of by radiating out the heat over time. The cooling rate typically ranges from 5°C/min to 50°C/min, for example 20°C/mm.
Step f): Separating the additive manufacturing powder having the secondary powder particles bound to the surface of the steel powder particles from agglomerated steel powder particles having the secondary powder particles bound to the surface. Separation may be, e.g. performed by sieving the particles, to remove particle agglomerates having a size of > 45 µm.

In another aspect, the present invention relates to the use of an additive manufacturing powder as described herein in additive manufacturing of three dimensional metal objects by means of a heat source. Preferably, the additive manufacturing powders according to the invention are used in an additive manufacturing process selected from the group consisting of: a powder-based laser melting process, an electron beam melting process, direct melting deposition, a diode beam melting process, and a binder jetting process (see above description of these processes).

In another aspect, the present invention relates to the use of an additive manufacturing powder in additive manufacturing of three dimensional metal objects by means of a heat source, wherein the additive manufacturing powder comprises a mixture of (i) a steel powder comprising steel powder particles, wherein the steel powder is selected from the group consisting of AISI 316 stainless steel powders, AISI 316L stainless steel powders, and combinations thereof (for chemical composition, see Table 1 and Table 2 above); and (ii) a secondary powder comprising secondary powder particles, wherein the secondary powder is selected from the group consisting of elemental silicon powder, elemental molybdenum powder, elemental manganese powder, elemental chromium powder, elemental nickel powder and combinations thereof. In these embodiments of use, additive manufacturing powders based on a mixture of steel powders and secondary particle powders are used as a feedstock material in additive manufacturing, preferably they are used as a feedstock material in an additive manufacturing process selected from the group consisting of: a powder-based laser melting process, an electron beam melting process, direct melting deposition, a diode beam melting process, and a binder jetting process.

These embodiments, however, are less preferred in comparison to powders prepared by diffusion bonding as described herein, because only part of the secondary particles remain mechanically interlocked to- or adhere to the steel particles' surfaces and, in addition, after using such additive manufacturing powder in a first additive manufacturing cycle, residual powder material has to be sieved out before it can be used in another additive manufacturing cycle. In these embodiments the secondary particles are in the form of loose particles and are mixed with the steel powder particles in an amount (in weight percent, wt-%), preferably as per one or more of the following:
- 0.1-1.0 wt % of silicon particles of particle size from 0.5-3 µm and of purity min 95 %; e.g. average particle size (APS) = 1 µm
- 0.1-1.0 wt % of silicon particles of particle size from 3-10 µm and of purity min 95 %; e.g. average particle size (APS) = 5 µm
- 0.1-1.5 wt % of molybdenum particles of particle size from 0.4-6.0 µm and of purity min 95 %; e.g. average particle size (APS) = 800 nm
- 0.1-1.5 wt % of molybdenum particles of particle size from 3.0-10 µm and of purity min 95 %; e.g. average particle size (APS) = 5 µm
- 0.2-1.5 wt % of chromium in form of particles of grain size between 1.0-10.0 µm of purity min 95 %; e.g. average particle size (APS) = 3 µm
- 0.2-1.5 wt % of manganese in form of particles of grain size between 1.0-10.0 µm of purity min 95 %; e.g. average particle size (APS) = 5 µm

Importantly, also in these embodiments relating to mixtures of steel powder and secondary powder, the overall chemical composition of the additive manufacturing powder (i.e. summarized chemical composition of steel powder and secondary powder) is preferably one of the following (see also Table 3 and Table 4 above):
- iron and the following components by weight percent (wt-%), based on the total weight of the additive manufacturing powder: chromium: 16.0-19.5 wt-%, nickel: 10.0-14.5 wt-%, manganese: up to 4.5 wt-%, silicon: up to 2.0 wt-%, molybdenum: 2.0-4.5 wt-%, carbon: up to 0.03 wt-%, sulphur: up to 0.03 wt-%, phosphorus: up to 0.045 wt-%; (additive manufacturing powder according to the invention based on AISI 316L stainless steel particles)
or
- iron and the following components by weight percent (wt-%), based on the total weight of the additive manufacturing powder: chromium: 16.0-19.5 wt-%, nickel: 10.0-14.5 wt-%, manganese: up to 4.5 wt-%, silicon: up to 2.0 wt-%, molybdenum: 2.0-4.5 wt-%, carbon: up to 0.07 wt-%, sulphur: up to 0.03 wt-%, phosphorus: up to 0.045 wt-%. (additive manufacturing powder according to the invention based on AISI 316 stainless steel particles)

Preferably, the additive manufacturing powders according to the present invention and described herein, are used in an additive manufacturing process that comprises a support-reduced forming of the three dimensional metal objects at a leaning angle between 90 degrees and 40 degrees or less, preferable at a leaning angle between 90 degrees and 20 degrees in respect of the printing plane. As regards the expression "support-reduced forming" as used herein, please see definition and description above.

In the following, in order to further demonstrate the present invention, illustrative and non-restrictive embodiments and examples are discussed, which are further illustrated by means of drawings, which show:
FIG. 1 Schemes of a particle of an additive manufacturing powder according to the invention (cross-section); (a) stainless steel particle having secondary powder particles (e.g. elemental silicon particles) bound on its surface, (b) stainless steel particle having a combination of several species of secondary powder particles (e.g. a combination of elemental nickel particles and elemental silicon particles) bound to its surface.
FIG. 2 Scanning electron microscopy (SEM) photography of 316L particles with superficially attached micro-particles of nickel and Chromium. Chromium particles are attached using nickel particles as intermediate bonding means.
FIG. 3 SEM photography of 316L particles with superficially attached secondary powder particles of elemental silicon having an average particle size (APS) of 500nm. The secondary powder particles are bonded by diffusion bonding.
FIG. 4 SEM photography of 316L particles with superficially attached secondary powder particles of manganese (APS < 1 µm). The secondary powder particles are bonded by diffusion bonding.
FIG. 5 SEM photography of 316L particles with superficially attached secondary powder particles of elemental chromium (APS = 3 µm) and elemental nickel (APS < 1 µm). The chromium particles are attached using nickel particles as intermediate bonding means.
FIG. 6 Schematic representation of laser scanning in a LPBF process.
FIG. 7 Schematics of a test stand for testing stability of the melt-track.
Fig. 8 Change of the melt-pool's contact angle (10) in function of area of melt-track cross-section (12) for the reference sample (non-modified AISI 316L/1.4404 powder).
FIG. 9 Roughness of an unsupported surface (see unsupported surface 29 on object shown in Fig. 9) in function of a leaning angle (27) for 2 materials: reference material (1.4404/AISI 316L) and for 1.4404/AISI 316L modified with addition of 0.3 wt-% of elemental silicon (99.0 % purity) of particle size between 0.2-1.0 µm (APS = 500 nm) attached to the steel particles by diffusion bonding.

### Description of additive manufacturing powders according to the invention and methods for producing the same

### Structure of the additive manufacturing powder particles

The additive manufacturing powder according to the invention comprises or consists of (i) a steel powder comprising steel powder particles, wherein the steel powder is selected from the group consisting of AISI 316 stainless steel powders, AISI 316L stainless steel powders, and combinations thereof; and (i) a secondary powder comprising secondary powder particles, wherein the secondary powder is selected from the group consisting of elemental silicon powder, elemental molybdenum powder, elemental manganese powder, elemental chromium powder, elemental nickel powder and combinations thereof; wherein the secondary powder particles are bound to the surface of the steel powder particles.

Thus, the steel powder particles act as a base particle or carrier particle for the secondary powder particles. The steel powder particles have a spherical or nearly spherical shape with an aspect ratio in a range 0.5-1.0, preferably with an aspect ratio in a range of 0.7 - 1.0. Preferably, the steel powder particles have a median particle size d50 of between 20 µm and 100 µm.

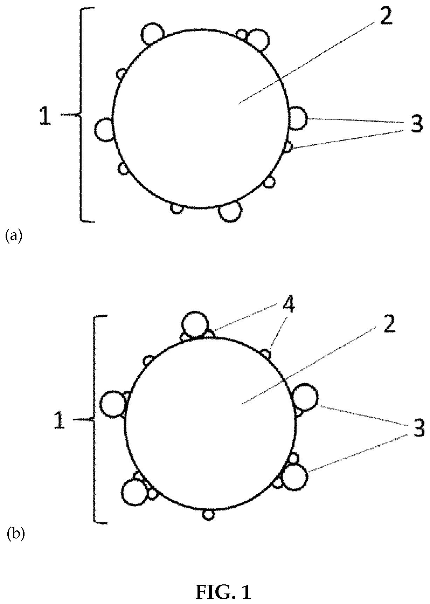

FIG. 1 (a) and (b) show two schematic embodiments of a particle of an additive manufacturing powder according to the invention (cross-section).

One embodiment of a steel powder particle having secondary powder particles attached to its surface is presented in FIG. 1 (a). The additive manufacturing powder particle **1** consists of an AISI 316/316L steel particle **2** (median particle size 20-100 µm) serving as a carrier particle, to which secondary powder particles **3** (e.g. silicon, molybdenum, chromium and/or manganese) are superficially attached in form of micro-/sub-micron-/nano-particles. The secondary powder particles are as defined in this disclosure.

Another embodiment of a steel powder particle having secondary powder particles attached to its surface is presented in FIG. 1 (b). In this embodiment, the additive manufacturing powder particle **1** consists of an AISI 316/316L steel particle **2** (median particle size 20-100 µm) serving as a carrier particle, to which secondary powder particles **3** are superficially attached in form of micro-/ sub-micron-/nano-particles selected from elemental particles of silicon, molybdenum, manganese, chromium and combinations thereof in combination with nickel particles, wherein the secondary nickel particles **4** are used as intermediate particles. Thus, in this embodiment, secondary nickel powder particles are used as bonding means for joining the steel powder particles with secondary powder particles of silicon, chromium, molybdenum, and/or manganese.

In the embodiments illustrated in FIGs 1(a) and (b) secondary particles **3** and **4** may be of spherical, irregular, cuboidal, blocky, elongated, flake and other similar shape.

### Producing an additive manufacturing powder according to the invention via diffusion bonding

The deposition of the secondary particles on the carrier particles is by diffusion bonding is performed by the following steps:
- blending the steel powder particles **2** and secondary powder particles **3, 4**
- placing the resulting blend in the furnace in inert atmosphere or vacuum
- heating up the blend to the temperature range between temperature of activation of the diffusion between carrier particles and secondary particles and activation of diffusion among the secondary particles.
- holding the temperature for the time necessary for formation of the diffusion necks between secondary particles and carrier particles.

Example A for diffusion bonding parameters: The following temperature profile is sufficient to create the diffusion necks between the secondary powder particles and the AISI 316 / AISI 316L stainless steel powder particles of the below combinations:
- Heating rate: 20°C / min up to 750°C
- Isothermal temperature: 0-10 min
- Cooling rate: 20°C / min down to 30°C
- Atmosphere: Argon (purity: 99.9999%) or Nitrogen (purity: 99.9999%).

### Combinations of Example A:

Steel powder AISI 316 / AISI 316L particles and one of the following secondary particles in an amount, as per one of the following:
- 0.1-0.4 wt % of silicon particles, based on the total weight of the additive manufacturing powder, silicon particle size up to 1.0 µm of purity min 95 %;
- 0.2-1.5 wt % of manganese particles, based on the total weight of the additive manufacturing powder, manganese particle size up to 1.0 µm of purity min 95 %.

Steel powder AISI 316 / AISI 316L particles and secondary powder being a combination of elemental nickel particles (max. 1.5 wt % based on the total weight of the additive manufacturing powder, particle size max. 1.0 µm, purity min 95 %) and one or more of the following:
- 0.1 - 1.0 wt % of silicon particles, based on the total weight of the additive manufacturing powder, silicon particle size from 0.5 µm - 3 µm (average particle size of e.g. about 1 µm), purity min 95 %;
- 0.1 - 1.0 wt % of silicon particles, based on the total weight of the additive manufacturing powder, silicon particle size from 3 µm -10 µm (average particle size of e.g. about 5 µm) of purity min 95 %;
- 0.1-1.5 wt % of molybdenum particles, based on the total weight of the additive manufacturing powder, molybdenum particle size from 3.0 µm -10 µm (average particle size of e.g. about 5 µm), purity min 95 %;
- 0.2-1.5 wt % of chromium particles, based on the total weight of the additive manufacturing powder, chromium, particle size from 1.0 µm -10.0 µm (average particle size of e.g. about 3 µm) of purity min 95 %;
- 0.2-1.5 wt % of manganese particles, based on the total weight of the additive manufacturing powder, manganese particle size from 1.0 µm - 10.0 µm (average particle size of e.g. about 5 µm) of purity min 95 %.

Example B for diffusion bonding parameters: The following temperature profile is sufficient to create the diffusion necks between the secondary powder particles and the AISI 316 / AISI 316L stainless steel powder particles of the below combinations:
- Heating rate: 20°C / min up to 1100°C
- Isothermal temperature: 0-20 min
- Cooling rate: 20°C / min down to 30°C
- Atmosphere: Argon (purity: 99.9999%) or Nitrogen (purity: 99.9999%).

### Combinations of Example B:

Steel powder AISI 316 / AISI 316L particles and one of the following secondary particles in an amount, as per one of the following:
- 0.1-1.5 wt % of molybdenum particles, based on the total weight of the additive manufacturing powder, molybdenum particle size up to 1.0 µm of purity min 95 %;
- 0.2-1.5 wt % of chromium particles, based on the total weight of the additive manufacturing powder, chromium, particle size up to 1.0 µm of purity min 95 %;

### Producing an additive manufacturing powder according to the invention via mixing method

Alternatively, but less preferred to the above-mentioned diffusion bonding method, the secondary particles **3** can also be bound on the carrier steel powder particles **2** by mixing the steel powder particles 2 with secondary powder particles having a particle size of up to 1.0 µm. Secondary powder particles **3** having a particle size of 1.0 µm or less adhere to the surface of the steel particles **2** via adhesive forces. For example, the secondary powder particles are mixed with steel powder particles (AISI 316 / AISI 316L) in an amount, as per one of the following:
- 0.1-0.4 wt % of silicon particles, based on the total weight of the additive manufacturing powder, silicon particle size up to 1.0 µm of purity min 95 %;
- 0.1-1.5 wt % of molybdenum particles, based on the total weight of the additive manufacturing powder, molybdenum particle size up to 1.0 µm of purity min 95 %;
- 0.2-1.5 wt % of chromium particles, based on the total weight of the additive manufacturing powder, chromium, particle size up to 1.0 µm of purity min 95 %;
- 0.2-1.5 wt % of manganese particles, based on the total weight of the additive manufacturing powder, manganese particle size up to 1.0 µm of purity min 95 %.
- Also combinations (blends) of the above listed secondary powder particles may be used.

### Chemical composition of additive manufacturing powders according to the invention

The overall chemical composition of the additive manufacturing powder, i.e. summarized chemical composition of steel powder and secondary powder, as obtained by the above-mentioned exemplary processes for producing the same (diffusion bonding, mixing method) is one of the following:
- Additive manufacturing powder according to the invention based on AISI 316L stainless steel particles, comprising: iron and the following components by weight percent (wt-%), based on the total weight of the additive manufacturing powder: chromium: 16.0-19.5 wt-%, nickel: 10.0-14.5 wt-%, manganese: up to 4.5 wt-%, silicon: up to 2.0 wt-%, molybdenum: 2.0-4.5 wt-%, carbon: up to 0.03 wt-%, sulphur: up to 0.03 wt-%, phosphorus: up to 0.045 wt-%;
or
- Additive manufacturing powder according to the invention based on AISI 316 stainless steel particles, comprising: iron and the following components by weight percent (wt-%), based on the total weight of the additive manufacturing powder: chromium: 16.0-19.5 wt-%, nickel: 10.0-14.5 wt-%, manganese: up to 4.5 wt-%, silicon: up to 2.0 wt-%, molybdenum: 2.0-4.5 wt-%, carbon: up to 0.07 wt-%, sulphur: up to 0.03 wt-%, phosphorus: up to 0.045 wt-%.

The above overall chemical composition of the additive manufacturing powders according to the invention is also given in Table 3 and Table 4 above.

### Scanning electron microscopy (SEM) images

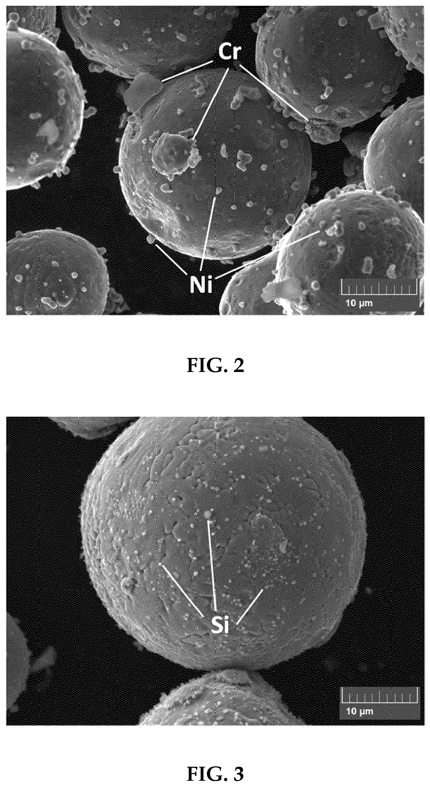

FIG. 2 - 5 show SEM images of particles of an additive manufacturing powder according to the invention.

FIG. 2 shows a SEM photography of 316L particles (particle size: 15-45 µm) with superficially attached micro-particles of nickel and chromium. Chromiumparticles (size 1.0-10.0 µm, APS = 3 µm, 1.0 wt-%) are attached using nickel particles (particle size: 0.4-1.0 µm, APS = 500 nm., 1.0 wt-%:) as intermediate bonding means. Method: diffusion bonding.

FIG. 3 shows a SEM photography of 316L particles (particle size: 15-45 µm) with superficially attached secondary powder particles of elemental silicon having an average particle size (APS) of 500 nm in an amount of 0.3 wt-%. The secondary powder particles are bonded by diffusion bonding.

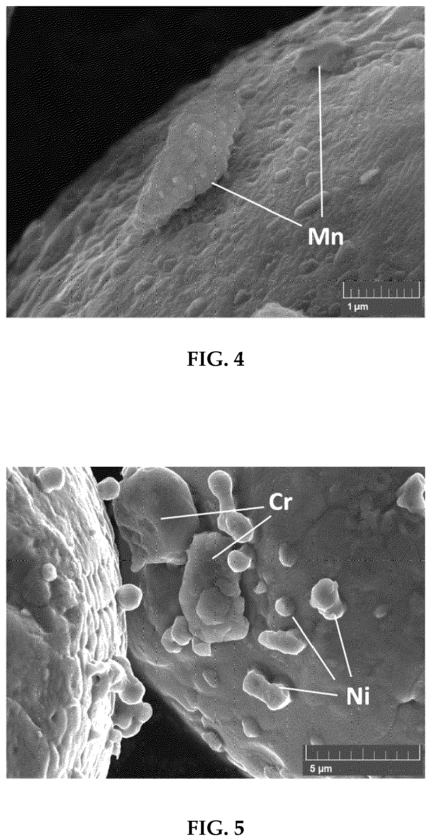

FIG. 4 shows a SEM photography of 316L particles (particle size: 15-45 µm) with superficially attached secondary powder particles of manganese (APS < 1 µm, 0.8 wt-%). The secondary powder particles are bonded by diffusion bonding.

FIG. 5 shows a SEM photography of 316L particles (particle size: 15-45 µm with superficially attached secondary powder particles of elemental chromium (APS = 3 µm, 1.0 wt-%) and elemental nickel (APS < 1 µm, 1. wt-%). The chromium particles are attached using nickel particles as intermediate bonding means. Method: diffusion bonding.

### Examples for preparing additive manufacturing powders according to the invention are described in the following.

In the following, examples 1 - 29 for preparing additive manufacturing powders according to the invention are given.

### Example 1:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.5-3.0 µm, APS = 1 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 0.3 wt % through 2 hours mixing in a turbula®-type mixer. The summarized silicon content in the additive manufacturing powder was equal to 0.93 wt %.

### Example 2:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.5-3.0 µm, APS = 1 µm) was determined/tested by using scanning electron microscopy (SEM). The elemental manganese powder was purchased from VWR. The manganese particle size range (1.0-10.0 µm) was determined/tested by using scanning electron microscopy (SEM). The silicon content stated by the manufacturer of 1.4404/AISI 316L base powder was equal to 0.63 wt %. The manganese content stated by the manufacturer of 1.4404/AISI 316L base powder was equal to 0.66 wt %. The elemental silicon powder was added to 1.4404/AISI 316L in amount of 0.3 wt % through 2 hours mixing in turbula®-type mixer. The elemental manganese powder was added to 1.4404/AISI 316L in amount of 0.8 wt % through 2 hours mixing in turbula®-type mixer. The summarized silicon content in the additive manufacturing powder was equal to 0.93 wt %. The summarized manganese content in the additive manufacturing powder was equal to 1.46 wt %.

### Example 3:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.5-3.0 µm, APS = 1 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 0.3 wt % through 2 hours mixing in turbula®-type mixer. The summarized silicon content in the additive manufacturing powder was equal to 0.93 wt %. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in turbula®-type mixer. The summarized nickel content was equal to 13.5 wt %. The powder blend was placed in the furnace and heated up to 750°C with a heating rate of 10°C/min under argon atmosphere. The isothermal temperature was held for 1 minute and then the powder was cooled down with a rate of 10°C/min. Then the mixture was sieved to remove particle agglomerate of size >45 µm.

### Example 4:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.2-1.0 µm, APS = 500 nm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 0.3 wt % through 2 hours mixing in turbula®-type mixer. The summarized silicon content in the additive manufacturing powder was equal to 0.93 wt %. The powder blend was placed in the furnace and heated up to 750°C with rate of 10°C/min under argon atmosphere. The isothermal temperature was held for 1 min and then the powder was cooled down with rate of 10°C/min. Then the mixture was sieved to remove particle agglomerate of size >45 µm.

### Example 5:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.2-1.0 µm, APS = 500 nm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 0.3 wt % through 2 hours mixing in a turbula®-type mixer. The summarized silicon content in the additive manufacturing powder was equal to 0.93 wt %.

### Example 6:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.2-1.0 µm, APS = 500 nm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %.

### Example 7:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.5-3.0 µm, APS = 1 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %.

### Example 8:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (3.0-10.0 µm, APS = 5 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 0.3 wt % through 2 hours mixing in a turbula®-type mixer. The summarized silicon content in the additive manufacturing powder was equal to 0.93 wt %.

### Example 9:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (3.0-10.0 µm, APS = 5 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %.

### Example 10:

The 1.4404/AISI 316L steel powder of particle size 10-45 µm (d90=42.7) was purchased from Carpenter Additive. The elemental manganese powder was purchased from VWR. The manganese powder particle size range (1.0-10.0 µm) was determined/tested by using scanning electron microscopy (SEM). The manganese content stated by the manufacturer of 1.4404/AISI 316L powder was equal to 0.66 wt %. The elemental manganese powder was added to 1.4404/AISI 316L in amount of 1.0 wt % through 2 hours mixing in a turbula®-type mixer. The summarized manganese content in the additive manufacturing powder was equal to 1.66 wt %.

### Example 11:

The 1.4404/AISI 316L steel powder of particle size 10-45 µm (d90=42.7) was purchased from Carpenter Additive. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %.

### Example 12:

The 1.4404/AISI 316L steel powder of particle size 10-45 µm (d90=42.7) was purchased from Carpenter Additive. The elemental chromium powder was purchased from US Research Nanomaterials Inc. The chromium powder particle size range (1.0-10.0 µm, APS = 3 µm) was determined/tested by using scanning electron microscopy (SEM). The chromium content stated by the manufacturer of 1.4404/AISI 316L powder was equal to 17.6 wt %. The elemental chromium powder was added to 1.4404/AISI 316L in amount of 0.1 wt % through 2 hours mixing in a turbula®-type mixer. The summarized chromium content in the additive manufacturing powder was equal to 17.7 wt %.

### Example 13:

The 1.4404/AISI 316L steel powder of particle size 10-45 µm (d90=42.7) was purchased from Carpenter Additive. The elemental molybdenum powder was purchased from US Research Nanomaterials Inc. The molybdenum powder particle size range (0.4-6.0 µm, APS = 800 nm) was determined/tested by using scanning electron microscopy (SEM). The molybdenum content stated by the manufacturer of 1.4404/AISI 316L powder was equal to 2.38 wt %. The elemental molybdenum powder was added to 1.4404/AISI 316L in amount of 0.7 wt % through 2 hours mixing in a turbula®-type mixer. The summarized molybdenum content in the additive manufacturing powder was equal to 3.08 wt %.

### Example 14:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.2-1.0 µm, APS = 500 nm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 0.3 wt % through 2 hours mixing in a turbula®-type mixer. The summarized silicon content in the additive manufacturing powder was equal to 0.93 wt %. The elemental manganese powder was purchased from VWR. The manganese powder particle size range (1.0-10.0 µm) was determined/tested by using scanning electron microscopy (SEM). The manganese content stated by the manufacturer of 1.4404/AISI 316L powder was equal to 0.66 wt %. The elemental manganese powder was added to 1.4404/AISI 316L in amount of 1.0 wt % through 2 hours mixing in a turbula®-type mixer. The summarized manganese content in the additive manufacturing powder was equal to 1.66 wt %.

### Example 15:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.2-1.0 µm, APS = 500 nm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 0.3 wt % through 2 hours mixing in a turbula®-type mixer. The summarized silicon content in the additive manufacturing powder was equal to 0.93 wt %. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %.

### Example 16:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.2-1.0 µm, APS = 500 nm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 0.3 wt % through 2 hours mixing in a turbula®-type mixer. The summarized silicon content in the additive manufacturing powder was equal to 0.93 wt %. The elemental molybdenum powder was purchased from US Research Nanomaterials Inc. The molybdenum powder particle size range (0.4-6.0 µm, APS = 800 nm) was determined/tested by using scanning electron microscopy (SEM). The molybdenum content stated by the manufacturer of 1.4404/AISI 316L powder was equal to 2.38 wt %. The elemental molybdenum powder was added to 1.4404/AISI 316L in amount of 0.7 wt % through 2 hours mixing in a turbula®-type mixer. The summarized molybdenum content in the additive manufacturing powder was equal to 3.08 wt %.

### Example 17:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.2-1.0 µm, APS = 500 nm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %.

### Example 18:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.5-3.0 µm, APS = 1 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %. The elemental manganese powder was purchased from VWR. The manganese powder particle size range (1.0-10.0 µm) was determined/tested by using scanning electron microscopy (SEM). The manganese content stated by the manufacturer of 1.4404/AISI 316L powder was equal to 0.66 wt %. The elemental manganese powder was added to 1.4404/AISI 316L in amount of 1.0 wt % through 2 hours mixing in a turbula®-type mixer. The summarized manganese content in the additive manufacturing powder was equal to 1.66 wt %.

### Example 19:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (0.5-3.0 µm, APS = 1 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %.

### Example 20:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (3.0-10.0 µm, APS = 5 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %. The elemental manganese powder was purchased from VWR. The manganese powder particle size range (1.0-10.0 µm) was determined/tested by using scanning electron microscopy (SEM). The manganese content stated by the manufacturer of 1.4404/AISI 316L powder was equal to 0.66 wt %. The elemental manganese powder was added to 1.4404/AISI 316L in amount of 1.0 wt % through 2 hours mixing in a turbula®-type mixer. The summarized manganese content in the additive manufacturing powder was equal to 1.66 wt %.

### Example 21:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (3.0-10.0 µm, APS = 5 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %.

### Example 22:

The 1.4404/AISI 316L steel powder of particle size 10-45 µm (d90=42.7) was purchased from Carpenter Additive. The elemental silicon powder was purchased from US Research Nanomaterials Inc. The silicon powder particle size range (3.0-10.0 µm, APS = 5 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %. The elemental manganese powder was purchased from VWR. The manganese powder particle size range (1.0-10.0 µm) was determined/tested by using scanning electron microscopy (SEM). The manganese content stated by the manufacturer of 1.4404/AISI 316L powder was equal to 0.66 wt %. The elemental manganese powder was added to 1.4404/AISI 316L in amount of 1.0 wt % through 2 hours mixing in a turbula®-type mixer. The summarized manganese content in the additive manufacturing powder was equal to 1.66 wt %. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %.

### Example 23

The 1.4404/AISI 316L steel powder of particle size 10-45 µm (d90=42.7) was purchased from Carpenter Additive. The elemental molybdenum powder was purchased from US Research Nanomaterials Inc. The molybdenum powder particle size range (0.4-6.0 µm, APS = 800 nm) was determined/tested by using scanning electron microscopy (SEM). The molybdenum content stated by the manufacturer of 1.4404/AISI 316L powder was equal to 2.38 wt %. The elemental molybdenum powder was added to 1.4404/AISI 316L in amount of 0.7 wt % through 2 hours mixing in a turbula®-type mixer. The summarized molybdenum content in the additive manufacturing powder was equal to 3.08 wt %.

The powder blend was placed in the furnace and heated up to 1100°C with a heating rate of 10°C/min under argon atmosphere. The isothermal temperature was held for 1 minute and then cooled down with rate of 10°C/min. Then the mixture was sieved to remove particle agglomerate of size >45 µm.

### Example 24:

The 1.4404/AISI 316L steel powder of particle size 10-45 µm (d90=42.7) was purchased from Carpenter Additive. The elemental molybdenum powder was purchased from US Research Nanomaterials Inc. The molybdenum powder particle size range (0.4-6.0 µm, APS = 800 nm) was determined/tested by using scanning electron microscopy (SEM). The molybdenum content stated by the manufacturer of 1.4404/AISI 316L powder was equal to 2.38 wt %. The elemental molybdenum powder was added to 1.4404/AISI 316L in amount of 0.7 wt % through 2 hours mixing in a turbula®-type mixer. The summarized molybdenum content in the additive manufacturing powder was equal to 3.08 wt %.

The powder blend was placed in the furnace and heated up to 1100°C with a heating rate of 10°C/min under argon atmosphere. The isothermal temperature was held by 10 minutes and then cooled down with rate of 10°C/min. Then the mixture was sieved to remove particle agglomerate of size >45 µm.

### Example 25:

The 1.4404/AISI 316L steel powder of particle size 10-45 µm (d90=42.7) was purchased from Carpenter Additive. The elemental manganese powder was purchased from VWR. The manganese powder particle size range (<1.0 µm) was determined/tested by using scanning electron microscopy (SEM). The manganese content stated by the manufacturer of 1.4404/AISI 316L powder was equal to 0.66 wt %. The elemental manganese powder was added to 1.4404/AISI 316L in amount of 1.0 wt % through 2 hours mixing in a turbula®-type mixer. The summarized manganese content in the additive manufacturing powder was equal to 1.66 wt %.

The powder blend was placed in the furnace and heated up to 750°C with a heating rate of 10°C/min under argon atmosphere. The isothermal temperature was held for 1 minute and then cooled down with rate of 10°C/min. Then the mixture was sieved to remove particle agglomerate of size >45 µm.

### Example 26:

The 1.4404/AISI 316L steel powder of particle size 10-45 µm (d90=42.7) was purchased from Carpenter Additive. The elemental chromium powder was purchased from US Research Nanomaterials Inc. The chromium powder particle size range (<1.0 µm) was determined/tested by using scanning electron microscopy (SEM). The chromium content stated by the manufacturer of 1.4404/AISI 316L powder was equal to 17.6 wt %. The elemental chromium powder was added to 1.4404/AISI 316L in amount of 1.0 wt % through 2 hours mixing in a turbula®-type mixer. The summarized chromium content in the additive manufacturing powder was equal to 18.6 wt %. The powder blend was placed in the furnace and heated up to 1100°C with a heating rate of 10°C/min under argon atmosphere. The isothermal temperature was held for 1 minute and then cooled down with rate of 10°C/min. Then the mixture was sieved to remove particle agglomerate of size >45 µm.

### Example 27:

The 1.4404/AISI 316L steel powder of particle size 10-45 µm (d90=42.7) was purchased from Carpenter Additive. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %. The elemental chromium powder was purchased from US Research Nanomaterials Inc. The chromium powder particle size range (1.0-10.0 µm, APS = 3 µm) was determined/tested by using scanning electron microscopy (SEM). The chromium content stated by the manufacturer of 1.4404/AISI 316L powder was equal to 17.6 wt %. The elemental chromium powder was added to 1.4404/AISI 316L in amount of 1.0 wt % through 2 hours mixing in a turbula®-type mixer. The summarized chromium content in the additive manufacturing powder was equal to 18.6 wt %.

The powder blend was placed in the furnace and heated up to 750°C with a heating rate of 10°C/min under argon atmosphere. The isothermal temperature was held for 1 minute and then cooled down with rate of 10°C/min. Then the mixture was sieved to remove particle agglomerate of size >45 µm.

### Example 28:

The 1.4404/AISI 316L steel powder of particle size 10-45 µm (d90=42.7) was purchased from Carpenter Additive. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %. The elemental silicon powder was purchased from US Research Nanomaterials Inc. The silicon powder particle size range (3.0-10.0 µm, APS = 5 µm) was determined/tested by using scanning electron microscopy (SEM). The silicon content stated by the manufacturer of 1.4404/AISI 316L powder was equal to 0.63 wt %. The elemental silicon powder was added to 1.4404/AISI 316L in amount of 1.0 wt % through 2 hours mixing in a turbula®-type mixer. The summarized silicon content in the additive manufacturing powder was equal to 1.63 wt %. The powder blend was placed in the furnace and heated up to 750°C with a heating rate of 10°C/min under argon atmosphere. The isothermal temperature was held for 1 minute and then cooled down with rate of 10°C/min. Then the mixture was sieved to remove particle agglomerate of size >45 µm.

### Example 29:

The 1.4404/AISI 316L steel powder of particle size 10-45 µm (d90=42.7) was purchased from Carpenter Additive. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %. The elemental manganese powder was purchased from VWR. The manganese powder particle size range (1.0-10.0 µm) was determined/ tested by using scanning electron microscopy (SEM). The manganese content stated by the manufacturer of 1.4404/AISI 316L powder was equal to 0.66 wt %. The elemental manganese powder was added to 1.4404/AISI 316L in amount of 1.0 wt % through 2 hours mixing in a turbula®-type mixer. The summarized manganese content in the additive manufacturing powder was equal to 1.66 wt %. The powder blend was placed in the furnace and heated up to 750°C with a heating rate of 10°C/min under argon atmosphere. The isothermal temperature was held for 1 minute and then cooled down with rate of 10°C/min. Then the mixture was sieved to remove particle agglomerate of size >45 µm.

### Example 30:

The 1.4404/AISI 316L steel powder of particle size 10-45 µm (d90=42.7) was purchased from Carpenter Additive. The elemental nickel powder was purchased from US Research Nanomaterials Inc. The nickel powder particle size range (0.4-1.0 µm, APS = 500 nm) was determined/tested by using scanning electron microscopy (SEM). The nickel content stated by the manufacturer of 1.4404/AISI 316L powder was equal to 12.5 wt %. The elemental nickel powder was added to 1.4404/AISI 316L in amount of 1.0 wt % through 2 hours mixing in a turbula®-type mixer. The summarized nickel content in the additive manufacturing powder was equal to 13.5 wt %. The elemental molybdenum powder was purchased from US Research Nanomaterials Inc. The molybdenum powder particle size range (3.0-10.0) was determined/tested by using scanning electron microscopy (SEM). The molybdenum content stated by the manufacturer of 1.4404/AISI 316L powder was equal to 2.38 wt %. The elemental molybdenum powder was added to 1.4404/AISI 316L in amount of 0.7 wt % through 2 hours mixing in a turbula®-type mixer. The summarized molybdenum content in the additive manufacturing powder was equal to 3.08 wt %. The powder blend was placed in the furnace and heated up to 750°C with a heating rate of 10°C/min under argon atmosphere. The isothermal temperature was held for 1 minute and then cooled down with rate of 10°C/min. Then the mixture was sieved to remove particle agglomerate of size >45 µm.

### Description of an additive manufacturing method (Laser Powder Bed Fusion (LPBF) process) using the additive manufacturing powder according to the invention.

FIG. 6 (a), (b) and (c) show a schematic illustration of Laser Powder Bed Fusion (LPBF) process. Generally, LPBF processes are widely used and well known in the art. When the laser beam **5** melts the layer of pulverulent material **6** it creates a melt-pool 7 (see FIG. 6 (a). Due to the rapid movement of a laser beam the melt-pool becomes elongated and is considered as liquid semi-cylinder **8** placed on the layer of previously solidified material **9** (see FIG. 6 (b)). The cylinder **8** remains stable as long as the contact angle **10** remains larger than 90° and as long as its length **11** is shorter than its diameter **12** multiplied by π. The area **30** is of cylinder **8** is also indicated. Now referring to FIG. 6 (c): When the leaned surface **13** is printed at a leaning angle **27** in respect to the printing plane **28,** then the contact line **14** of the liquid semi-cylinder is limited while the amount of molten powder **15** is increased. Thus, when using conventional additive manufacturing powders, the stability of the melt-pool decreases; finally, when it loses stability, it creates separate droplets that may detach from the produced part. The present invention is based on the surprising finding that additive manufacturing powders **1** (cf. FIG. 1) according to the invention provide for a significantly improved stability of the melt-track during additive manufacturing of three dimensional metal objects.

This beneficial technical effect is demonstrated and evidenced by the experimental data given below. An improved stability of the melt-track results in a shorter and more cost-efficient production of three-dimensional objects, since the thickness of the powder layer can be increased, the speed of the laser spot can be increased and the number of supporting structures can be decreased or even entirely omitted for surfaces leaned at angle larger than 20 degrees..

As per the inventor's observation, without wished to be bound to a certain theory, the surface-bound secondary powder particles **3, 4** have specific properties having a beneficial effect on the melt-track stability when using the powders of the invention during additive manufacturing. The secondary powder particles **3, 4** which are attached to the surface of the steel powder particles 2 to form an additive manufacturing powder particle **1** according to the invention (cf. FIG. 1 (a), (b)), fulfill the following goals:
- Silicon:
   ∘ increases wetting angle of the steel via reducing the oxides due to its high affinity to oxygen promoting in this way larger contact line of a melt-pool
   ∘ locally creates low-melting silicon-rich eutectic liquid phase increasing wetting
   ∘ these effects combined allow for quicker outflow of the heat therefore, allowing quicker solidification of the melt-pool what increases its stability.
- Chromium:
   ∘ increases wetting angle of the steel via reducing the oxides due to its high affinity to oxygen promoting in this way larger contact line of a melt-pool
- Molybdenum:
   ∘ serves as inoculant promoting quick solidification due to its high melting temperature when the overhanging droplet of molten powder **15** falls off the leaned surface **14.**
- Manganese:
   ∘ creates a low-melting liquid phase which enables more effective heat outflow promoting quicker solidification of a melt-pool.
- Nickel:
   ∘ Secondary nickel particles **4** serve as a bonding mean for joining carrier steel particles **2** and secondary particles **3** (cf. FIG. 1 (b)).

### Measurement of melt-track stability of additive manufacturing powders

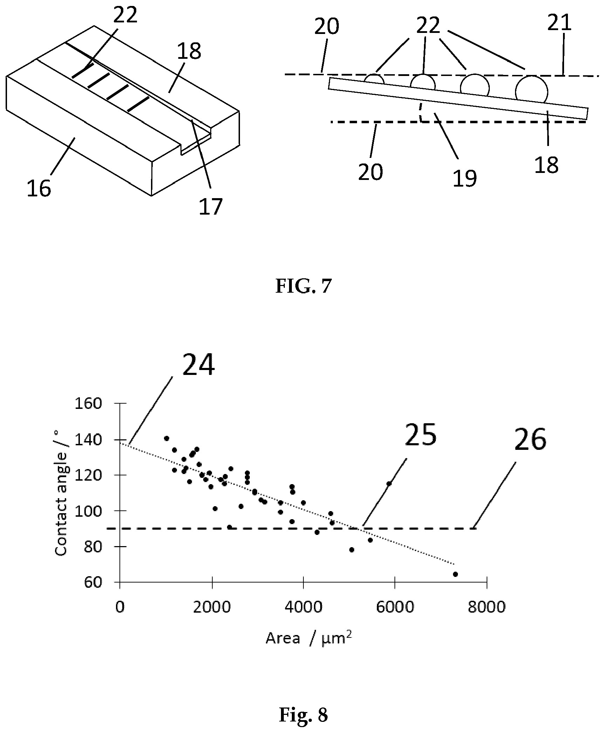

Melt-track stability was measured using a test-stand presented in FIG. 7 which consists of a steel base plate **16** with a groove **17** in which a temporary test-plate **18** is placed and fixed. The groove **17** and therefore the temporary test-plate **18** are placed at an angle **19** = 0.1719° in respect to the horizontal plane **20.** The remaining space of the groove is then filled with the additive manufacturing powder **21** and placed in a 3D printing apparatus. The singular melt-tracks **22** are printed every two millimeters in direction perpendicular to the test-plate length. Then the melt-tracks **22** are cut in plane perpendicular to their axes and, using their cross-sections, the contact angle **10** and the area **30** (see FIG. 6(b)) are measured and put on plots as presented in FIG. 8 and interpolated with linear function **24.** The intersection point **25** of the linear function line **24** and the line **26** relating to the value of 90° defines the point of maximum stability of the melt-track **22.** Table 5 presents the values of the maximum stability of a melt-track for tested steel powders modified with secondary particles of silicon, nickel, chromium, manganese and molybdenum added by mixing. In the leftmost column of Table 5, the Example No. of tested powder among Examples 1 - 30 given above is indicated.

**Table 5: Stability of melt-tracks of tested powder blends based on AISI 316/AISI 316L.**

| | AISI 316/ 316L | Si | Si | Si | Mn | Ni | Cr | Mo | Melt-track cross-section area when contact angle = 90 deg / µm2 |
|---|---|---|---|---|---|---|---|---|---|
| Ex. No. | 10-45 µm | 0.2-1.0 µm APS = 500 nm | 0.5-3.0 µm APS = 1 µm | 3.0-10.0 µm APS = 5 µm | 1.0-10.0 µm | 0.4-1.0 µm APS = 500 nm | 1.0-10.0 µm APS = 3 µm | 0.4-6.0 µm APS = 800 nm | |
| Ref. | 100.0 | - | - | - | - | - | - | - | 4852 |
| 5 | 99.7 | 0.3 | - | - | - | - | - | - | 5429 |
| 6 | 99.0 | 1 | | | | | | | 5930 |
| 1 | 99.7 | - | 0.3 | - | - | - | - | - | 6935 |
| 7 | 99.0 | - | 1 | - | - | - | - | - | 5374 |
| 8 | 99.7 | - | - | 0.3 | - | - | - | - | 7083 |
| 9 | 99.0 | - | - | 1 | - | - | - | - | 7414 |
| 10 | 99.2 | - | - | - | 1 | - | - | - | 6420 |
| 11 | 99.0 | - | - | - | - | 1 | - | - | 6268 |
| 12 | 99.9 | - | - | - | - | - | 0.1 | - | 7052 |
| 13 | 99.3 | - | - | - | - | - | - | 0.7 | 6105 |
| 14 | 98.9 | 0.3 | - | - | 1 | - | - | - | 7051 |
| 15 | 98.7 | 0.3 | - | - | - | 1 | | | 5533 |
| 16 | 99.0 | 0.3 | - | - | - | | - | 0.7 | 7166 |
| 17 | 98.0 | 1 | - | - | - | 1 | - | - | 5700 |
| 18 | 98.0 | - | 1 | - | 1 | | - | - | 6442 |
| 19 | 98.0 | - | 1 | - | - | 1 | - | - | 7566 |
| 20 | 98.0 | - | - | 1 | 1 | - | - | - | 5539 |
| 21 | 98.0 | - | - | 1 | - | 1 | - | - | 5998 |
| 2 | 97.0 | - | - | 1 | 1 | 1 | - | - | 6377 |

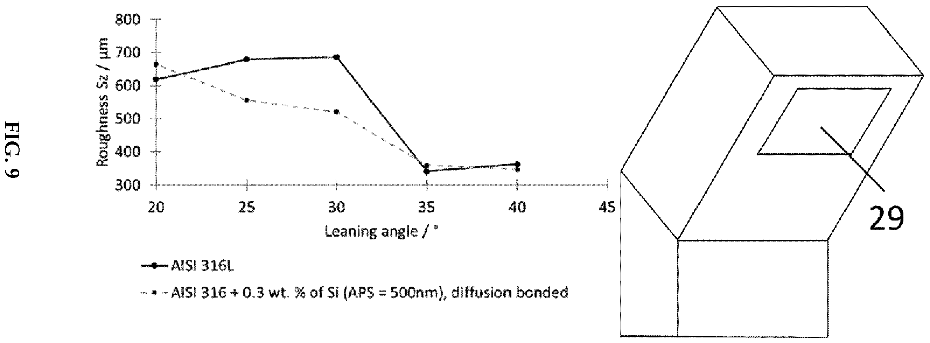

Tables 6 - 13 show the result of testing the roughness of an unsupported surface of a sample printed without support structures at stepwise changing the leaning angle **27** in respect to the printing plane **28** (cf. Fig. 6 (c)). The roughness parameters Sa (average value of roughness) and Sz (difference between the deepest pit and the highest peak on the tested surface) were obtained by scanning an unsupported surface **29** of a steel object (see exemplary steel object in FIG. 9 with surface **29**) using a Keyence 3D surface profiler (FIG. 9). As an example the data comparison for reference sample of AISI 316 / AISI 316L powder and AISI 316L modified with 0.3-wt. % of Si (APS 500nm; diffusion bonded) is presented in FIG. 9.

**Table 6: Roughness of unsupported leaned surface; Material: AISI 316L**

| Leaning angle / ° | 15 | 20 | 25 | 30 | 35 | 40 |
|---|---|---|---|---|---|---|
| Sa / µm | N/A | 96.6 | 97.3 | 101.2 | 32.0 | 36.3 |
| Sz / µm | N/A | 618.7 | 678.9 | 686 | 340.6 | 362.4 |

**Table 7: Roughness of unsupported leaned surface; Material: AISI 316L + 0,3 wt.% of Chromium (APS = 3um, Mixing)**

| Leaning angle / ° | 15 | 20 | 25 | 30 | 35 | 40 |
|---|---|---|---|---|---|---|
| Sa / µm | N/A | 91.4 | 90.7 | 89.2 | 43.5 | 22.1 |
| Sz / µm | N/A | 550.7 | 517.5 | 542.7 | 372.2 | 185.8 |

**Table 8: Roughness of unsupported leaned surface; Material: 316L + 1 wt.% of Chromium (APS = 3um, Mixing)**

| Leaning angle / ° | 15 | 20 | 25 | 30 | 35 | 40 |
|---|---|---|---|---|---|---|
| Sa / µm | 77.9 | 91.0 | 90.8 | 83 | 40.5 | 26.4 |
| Sz / µm | 583.8 | 617.3 | 554.1 | 514.6 | 314.1 | 242.8 |

**Table 9: Roughness of unsupported leaned surface; Material: 316L + 0,8wt. % Molybdenum (APS = 800nm, Mixing)**

| Leaning angle / ° | 15 | 20 | 25 | 30 | 35 | 40 |
|---|---|---|---|---|---|---|
| Sa / µm | 92.7 | 101.6 | 88.6 | 86.8 | 35.1 | 20.5 |
| Sz / µm | 611.1 | 577.1 | 622.7 | 567.7 | 304.9 | 215.5 |

**Table 10: Roughness of unsupported leaned surface; Material: 316L + 0,8wt. % Molybdenum (grain size 3.0-10.0 µm, Mixing)**

| Leaning angle / ° | 15 | 20 | 25 | 30 | 35 | 40 |
|---|---|---|---|---|---|---|
| Sa / µm | N/A | 95.8 | 87.0 | 84.3 | 33.0 | 23.2 |
| Sz / µm | N/A | 806.5 | 540.4 | 629.1 | 289.8 | 214.8 |

**Table 11: Roughness of unsupported leaned surface; Material: 316L + 1 wt. % Nickel + 0,3 wt. % Silicon (Nickel APS = 800nm, Silicon APS = 1um, Diffusion bonding)**

| Leaning angle / ° | 15 | 20 | 25 | 30 | 35 | 40 |
|---|---|---|---|---|---|---|
| Sa / µm | 80.0 | 93.0 | 86.4 | 88.9 | 47.5 | 27.5 |
| Sz / µm | 562.4 | 615.9 | 508.7 | 553.2 | 355.1 | 257.3 |

**Table 12: Roughness of unsupported leaned surface; Material: 316L + 0,3 wt. % Silicon (APS = 500nm, Diffusion bonding)**

| Leaning angle / ° | 15 | 20 | 25 | 30 | 35 | 40 |
|---|---|---|---|---|---|---|
| Sa / µm | 77.2 | 89.8 | 83.3 | 79.8 | 55.4 | 42.1 |
| Sz / µm | 644.2 | 663.9 | 557 | 520.7 | 359.2 | 347.4 |

**Table 13: Roughness of unsupported leaned surface; Material: 316L + 0,8 wt. % Manganese + 0,3 wt. % Silicon (Manganese APS = 10um, Silicon APS = 1um, Mixing)**

| Leaning angle / ° | 15 | 20 | 25 | 30 | 35 | 40 |
|---|---|---|---|---|---|---|
| Sa / µm | 77.4 | 93.9 | 98.6 | 79.9 | 43.8 | 26.5 |
| Sz / µm | 599.7 | 508.4 | 571.2 | 545.1 | 329.3 | 270.2 |

Discussion of the results: Table 5 present the results of stability of the melt-track of various powder blends. The higher was the obtained value the higher was the stability of the melt-track therefore the lower is the expected leaning angle at which the surface can be printed without support structures. Selected blends were created for printing cubes in order to verify the results of stability of single tracks. Cubes were printed at increasingly decreasing leaning angle (from 40 degrees down to 15 degrees). In all above listed cases (Table 7 - Table 13) the roughness of the modified blends was lower than for the reference sample (Table 6) what brings the confirmation to the obtained results. The obtained results show that by improving the stability of the melt-pool during the LPBF process the roughness of an unsupported surface can be improved.

The invention creates the possibility of manufacturing steel components with overhang surfaces via layer-wise additive manufacturing using a heat source (e.g. LPBF) with a reduced amount of support structures or even no support structures at all, and without the need of modifying the conventionally applied process parameters such as laser power, laser spot speed, hatching distance, layer thickness etc.

### Tests regarding the exploration of the applicability range of additive manufacturing powders (invention and comparative examples).

Different kinds of steel powders were tested in order to determine, which kind of steel powders, in combination with secondary powder particles bound to their surfaces, increase the stability of the melt-track and which do not.

The following well known and widely used steel powders were tested:
- 17-4PH
- AISI 304
- AISI 316L
- M300

Secondary powder particles deposited on surfaces of steel powder particles were of three categories:
- Deoxidizers which eliminate the oxides from steel particles improving the wetting angle between the melt-pool and the solid particle e.g. chromium and silicon
- Elements facilitating the appearance of the temporary liquid phase between the neighbouring steel particles e.g. silicon, chromium and manganese
- Refractory elements which serve as nucleation sites in order to shorten the solidification process e.g. Molybdenum

These particles were deposited or/and added to the steel powders in different particle size distribution and amount.

The roughness was tested as described above in relation to FIG. 9. The roughness parameters Sa (average roughness) and Sz (difference between the deepest pit and the highest peak on the tested surface) were obtained by scanning the surface using a Keyence 3D surface profiler.

The results are given in detail in the below tables and are summarized in the following:
- The steels powders 17-4PH, M30 and AISI 304 did not respond well to any of the additions nor to deposited particles.
- AISI 316L responded well to modifications listed below and unsupported surfaces were significantly smoother.

To summarize the results of the different tested steel powders:
- 17-4PH - does not work
- AISI 304 - does not work
- AISI 316L - works
- M300 - does not work

Discussion of the results: The presented results show that the quality of unsupported surface may be improved when a component is manufactured via LPBF from powder of AISI 316 / AISI 316L stainless steel. Surprisingly, this effect was not observed in other commonly used steel powders even those of similar chemical composition e.g. AISI 304. The results also show that there are three ways of stabilizing the melt-pool i.e. by deoxidizing the underlying surface, by inducing appearance of temporary liquid phase or by inoculation.

### Reference sample 316L

| Leaning angle / ° | 15 | 20 | 25 | 30 | 35 | 40 |
|---|---|---|---|---|---|---|
| Sa / µm | N/A | 96.6 | 97.3 | 101.2 | 32 | 36.3 |
| Sz / µm | N/A | 618.7 | 678.9 | 686 | 340.6 | 362.4 |

### Successful modifications of AISI 316L steel powder (additive manufacturing powders according to the invention)

316L + 0,3 wt.% of Chromium (APS = 3um, Mixing)

| Leaning angle / ° | 15 | 20 | 25 | 30 | 35 | 40 |
|---|---|---|---|---|---|---|
| Sa / µm | N/A | 91.4 | 90.7 | 89.2 | 43.5 | 22.1 |
| Sz / µm | N/A | 550.7 | 517.5 | 542.7 | 372.2 | 185.8 |

316L + 1 wt.% of Chromium (APS = 3um, Mixing)

| Leaning angle / ° | 15 | 20 | 25 | 30 | 35 | 40 |
|---|---|---|---|---|---|---|
| Sa / µm | 77.9 | 91,0 | 90.8 | 83 | 40.5 | 26.4 |
| Sz / µm | 583.8 | 617.3 | 554.1 | 514.6 | 314.1 | 242.8 |

316L + 0,8wt. % Molybdenum (APS = 800nm, Mixing)

| Leaning angle / ° | 15 | 20 | 25 | 30 | 35 | 40 |
|---|---|---|---|---|---|---|
| Sa / µm | 92.7 | 101.6 | 88.6 | 86.8 | 35.1 | 20.5 |
| Sz / µm | 611.1 | 577.1 | 622.7 | 567.7 | 304.9 | 215.5 |

316L + 0,8wt. % Molybdenum (APS = 10 µm, Mixing)

| Leaning angle / ° | 15 | 20 | 25 | 30 | 35 | 40 |
|---|---|---|---|---|---|---|
| Sa / µm | N/A | 95.8 | 87 | 84.3 | 33,0 | 23.2 |
| Sz / µm | N/A | 806.5 | 540.4 | 629.1 | 289.8 | 214.8 |

316L + 1 wt. % Nickel + 0,3 wt. % Silicon (Nickel APS = 800nm, Silicon APS = 1um, Diffusion bonding)

| Leaning angle / ° | 15 | 20 | 25 | 30 | 35 | 40 |
|---|---|---|---|---|---|---|
| Sa / µm | 80,0 | 93,0 | 86.4 | 88.9 | 47.5 | 27.5 |
| Sz / µm | 562.4 | 615.9 | 508.7 | 553.2 | 355.1 | 257.3 |

316L + 0,3 wt. % Silicon (APS = 500nm, Diffusion bonding)

| Leaning angle / ° | 15 | 20 | 25 | 30 | 35 | 40 |
|---|---|---|---|---|---|---|
| Sa / µm | 77.2 | 89.8 | 83.3 | 79.8 | 55.4 | 42.1 |
| Sz / µm | 644.2 | 663.9 | 557 | 520.7 | 359.2 | 347.4 |

316L + 0,8 wt. % Manganese + 0,3 wt. % Silicon (Manganese APS = 10um, Silicon APS = 1um, Mixing)

| Leaning angle / ° | 15 | 20 | 25 | 30 | 35 | 40 |
|---|---|---|---|---|---|---|
| Sa / µm | 77.4 | 93.9 | 98.6 | 79.9 | 43.8 | 26.5 |
| Sz / µm | 599.7 | 508.4 | 571.2 | 545.1 | 329.3 | 270.2 |

### Modifications of other steel powders (comparative examples, not successful)

### Tests based on steel particles: 17-4PH

17-4PH reference sample, non-modified steel powder

| Leaning angle / ° | 15 | 20 | 25 | 30 | 35 | 40 |
|---|---|---|---|---|---|---|
| Sa / µm | 92.5 | 107.3 | 91.3 | 88.8 | 43.9 | 24,0 |
| Sz / µm | 650,0 | 758.1 | 563.1 | 488.5 | 358,0 | 271.6 |

17-4PH + 1 wt. % Nickel + 1 wt. % Chromium (Nickel APS = 800nm, Chromium APS = 3um, Mixing)

| Leaning angle / ° | 15 | 20 | 25 | 30 | 35 | 40 |
|---|---|---|---|---|---|---|
| Sa / µm | 100.9 | 109.2 | 64.2 | 68,0 | 54.5 | 57.9 |
| Sz / µm | 1017.3 | 895.4 | 552.4 | 525.8 | 439.8 | 421.9 |

17-4PH + 0,3 wt. % Silicon + 1 wt. % Chromium (Silicon APS = 500nm, Chroimum APS = 3um, Diffusion bonding)

| Leaning angle / ° | 15 | 20 | 25 | 30 | 35 | 40 |
|---|---|---|---|---|---|---|
| Sa / µm | 105.9 | 86.2 | 86.1 | 94.5 | 74.4 | 34.6 |
| Sz / µm | 1100.1 | 861.6 | 688.7 | 568.2 | 462,0 | 400.7 |

17-4PH + 0,3 wt. % Silicon (Silicon APS = 500nm, Diffusion bonding)

| Leaning angle / ° | 15 | 20 | 25 | 30 | 35 | 40 |
|---|---|---|---|---|---|---|
| Sa / µm | 87.9 | 91,0 | 98.2 | 89.2 | 64.6 | 35.7 |
| Sz / µm | 611.8 | 673,0 | 806.8 | 541.5 | 433.3 | 318.4 |

17-4PH + 0,3 wt. % Silicon + 1 wt. % Nickel (Silicon APS = 1um, Nickel APS = 800nm, Diffusion bonding)

| Leaning angle / ° | 15 | 20 | 25 | 30 | 35 | 40 |
|---|---|---|---|---|---|---|
| Sa / µm | 92.8 | 94.8 | 101.7 | 85.8 | 58.5 | 27.9 |
| Sz / µm | 712.8 | 775.1 | 967.3 | 501,0 | 384,0 | 240.5 |

### Tests based on steel particles: AISI 304

304 reference sample, non-modified steel powder

| Leaning angle / ° | 15 | 20 | 25 | 30 | 35 | 40 |
|---|---|---|---|---|---|---|
| Sa / µm | 83.8 | 92.8 | 88.6 | 91.4 | 43.2 | 19.2 |
| Sz / µm | 604,0 | 603.8 | 489.4 | 596.4 | 349.6 | 191.6 |

AISI304 + 0,3 wt. % Silicon (Silicon APS = 500nm, Diffusion bonding)

| Leaning angle / ° | 15 | 20 | 25 | 30 | 35 | 40 |
|---|---|---|---|---|---|---|
| Sa / µm | 103.4 | 97,0 | 100,0 | 93.6 | 50.7 | 35.3 |
| Sz / µm | 761.6 | 764.4 | 651.2 | 487.9 | 436.8 | 421.9 |

AISI304 + 0,3 wt. % Silicon + 1 wt. % Chromium (Silicon APS = 500nm, Chroimum APS = 3um, Diffusion bonding)

| Leaning angle / ° | 15 | 20 | 25 | 30 | 35 | 40 |
|---|---|---|---|---|---|---|
| Sa / µm | 116.1 | 105.8 | 125.7 | 100.3 | 60.3 | 31.8 |
| Sz / µm | 817.7 | 765.3 | 863.4 | 618,0 | 452,0 | 307.6 |

AISI304 + 0,3 wt. % Silicon + 1 wt. % Nickel (Silicon APS = 1um, Nickel APS = 800nm, Diffusion bonding)

| Leaning angle / ° | 15 | 20 | 25 | 30 | 35 | 40 |
|---|---|---|---|---|---|---|
| Sa / µm | 79.9 | 90.9 | 111.9 | 88.1 | 47.8 | 25.5 |
| Sz / µm | 597.4 | 703.4 | 728.2 | 561.5 | 402.3 | 244.7 |

### Tests based on steel particles: 1.2709/M300

**1.2709/ M300 reference sample, non-modified steel powder**

| Leaning angle / ° | 15 | 20 | 25 | 30 | 35 | 40 |
|---|---|---|---|---|---|---|
| Sa / µm | 82,0 | 86.6 | 79.1 | 41.9 | 23.3 | 22,0 |
| Sz / µm | 586.3 | 613.2 | 470.2 | 342.5 | 292.3 | 205.5 |

M300 + 1 wt. % Nickel + 1 wt. % Chromium (Nickel APS = 800nm, Chroimum APS = 3um, Mixing)

| Leaning angle / ° | 15 | 20 | 25 | 30 | 35 | 40 |
|---|---|---|---|---|---|---|
| Sa / µm | 102.4 | 91,0 | 84.9 | 95.2 | 77.4 | 36,0 |
| Sz / µm | 701.8 | 625.8 | 541.1 | 727.7 | 534 | 372.9 |

M300 + + 0,3 wt. % Silicon + 1 wt. % Chromium (Silicon APS = 500nm, Chroimum APS = 3um, Diffusion bonding)

| Leaning angle / ° | 15 | 20 | 25 | 30 | 35 | 40 |
|---|---|---|---|---|---|---|
| Sa / µm | 80.5 | 86.2 | 88.9 | 97.6 | 60,0 | 30.6 |
| Sz / µm | 577,0 | 577.5 | 650.3 | 628.8 | 443.8 | 303.8 |

M300 + 0,3 wt. % Silicon (Silicon APS = 500nm, Diffusion bonding)

| Leaning angle / ° | 15 | 20 | 25 | 30 | 35 | 40 |
|---|---|---|---|---|---|---|
| Sa / µm | 85.9 | 78.4 | 96.9 | 75,0 | 41.1 | 24.5 |
| Sz / µm | 553.9 | 565.3 | 581.7 | 447.5 | 338.1 | 295.9 |

M300 + 0,3 wt. % Silicon + 1 wt. % Nickel (Silicon APS = 1um, Nickel APS = 800nm, Diffusion bonding)

| Leaning angle / ° | 15 | 20 | 25 | 30 | 35 | 40 |
|---|---|---|---|---|---|---|
| Sa / µm | 80.3 | 94.9 | 90.8 | 86.6 | 38.4 | 22.9 |
| Sz / µm | 601.6 | 707.2 | 527.5 | 511.4 | 307,0 | 208.4 |

## Claims

1. An additive manufacturing powder for use in additive manufacturing of three dimensional objects by means of a heat source, wherein the additive manufacturing powder comprises or consists of:
• a steel powder comprising steel powder particles, wherein the steel powder is selected from the group consisting of AISI 316 stainless steel powders, AISI 316L stainless steel powders, and combinations thereof; and
• a secondary powder comprising secondary powder particles, wherein the secondary powder is selected from the group consisting of elemental silicon powder, elemental molybdenum powder, elemental manganese powder, elemental chromium powder, elemental nickel powder and combinations thereof;
wherein the secondary powder particles are bound to the surface of the steel powder particles.

2. The additive manufacturing powder according to claim 1, **characterized in that** the secondary powder is selected from the group consisting of: elemental silicon powder, elemental manganese powder, elemental chromium powder, and elemental molybdenum powder.

3. The additive manufacturing powder according to claim 1, **characterized in that** the secondary powder is selected from the group consisting of: a combination of elemental nickel powder and elemental silicon powder having a particle size of 0.5 µm - 3µm or of 3 µm - 10 µm, a combination of elemental nickel powder and elemental molybdenum powder having a particle size of 3.0 µm - 10 µm, a combination of elemental nickel powder and elemental manganese powder having a grain size of 1.0 µm - 10.00 µm, and a combination of elemental manganese powder having a grain size of 1.0 µm - 10.00 µm and elemental silicon powder having a grain size of 0.5 µm - 3µm; wherein the elemental nickel powder has a particle size of up to 1.0 µm and is present in an amount of up to 1.5 wt-%, preferably up to 1.0 wt-%, based on the total weight of the additive manufacturing powder .

4. The additive manufacturing powder according to claim 1, **characterized in that** the secondary powder is selected from the group consisting of: elemental silicon powder having a particle size of up to 1.0 µm, elemental manganese powder having a particle size of up to 1.0 µm, elemental chromium powder having a particle size of up to 1.0 µm, and elemental molybdenum powder having a particle size of up to 1.0 µm, or combinations thereof; wherein preferably, the additive manufacturing powder is obtained by a diffusion bonding process.

5. The additive manufacturing powder according to any one of claims 1 to 4, **characterized in that** the additive manufacturing powder is obtained by a diffusion bonding process.

6. The additive manufacturing powder according to any one of claims 1 to 5, **characterized in that** the secondary powder (by weight percent [wt-%]) is present in the additive manufacturing powder in an amount, as per the following:
• elemental silicon powder being present in an amount from 0.1 wt-% up to 1.0 wt-%, preferably up to 0.3 wt-%, based on the total weight of the additive manufacturing powder;
• elemental molybdenum powder being present in an amount from 0.1 wt-% up to 1.5 wt-%, preferably up to 1.0 wt-%, based on the total weight of the additive manufacturing powder;
• elemental nickel powder being present in an amount of up to 1.5 wt-%, preferably up to 1.0 wt-%, based on the total weight of the additive manufacturing powder;
• elemental chromium powder being present in an amount from 0.2 wt-% up to 1.5 wt-%, preferably up to 1.0 wt-%, based on the total weight of the additive manufacturing powder;
• the elemental manganese powder being present in an amount from 0.2 wt-% up to 1.5 wt-%, preferably up to 1.0 wt-%, based on the total weight of the additive manufacturing powder.

7. The additive manufacturing powder according any one of claims 1 to 6, **characterized in that** the overall chemical composition of the additive manufacturing powder is one of the following:
• iron and the following components by weight percent (wt-%), based on the total weight of the additive manufacturing powder: chromium: 16.0-19.5 wt-%, nickel: 10.0-14.5 wt-%, manganese: up to 4.5 wt-%, silicon: up to 2.0 wt-%, molybdenum: 2.0-4.5 wt-%, carbon: up to 0.03 wt-%, sulphur: up to 0.03 wt-%, phosphorus: up to 0.045 wt-%;
or
• iron and the following components by weight percent (wt-%), based on the total weight of the additive manufacturing powder: chromium: 16.0-19.5 wt-%, nickel: 10.0-14.5 wt-%, manganese: up to 4.5 wt-%, silicon: up to 2.0 wt-%, molybdenum: 2.0-4.5 wt-%, carbon: up to 0.07 wt-%, sulphur: up to 0.03 wt-%, phosphorus: up to 0.045 wt-%.

8. The additive manufacturing powder according any one of claims 1 to 7, wherein the secondary powder particles have the following particle sizes [µm] and purity [%]:
• elemental silicon powder particles from 0.2 µm - 1.0 µm; purity of at least 95 %
• elemental silicon powder particles from 0.5 µm - 3.0 µm; purity of at least 95 %
• elemental silicon powder particles from 3.0 µm - 10.0 µm; purity of at least 95 %
• elemental molybdenum powder particles from 0.4 µm - 6.0 µm; purity of at least 95 %
• elemental molybdenum powder particles from 3 µm - 10.0 µm; purity of at least 95 %
• elemental manganese powder particles form 0.2 µm -1.0 µm; purity of at least 95 %
• elemental manganese powder particles from 1.0 µm - 10.0 µm; purity of at least 95 %
• elemental chromium powder particles from 0.2 µm -1.0 µm; purity of at least 95 %
• elemental chromium powder particles from 1.0 µm - 10.0 µm; purity of at least 95 %
• elemental nickel powder particles from 0.4 µm - 1.0 µm; purity of at least 95 %.

9. The additive manufacturing powder according any one of claims 1 to 8, wherein the steel powder particles have a spherical or nearly spherical shape with an aspect ratio in a range 0.5-1.0, preferably with an aspect ratio in a range of 0.7 - 1.0, and wherein the steel powder particles preferably have a median particle size d50 of between 20 µm and 100 µm.

10. The additive manufacturing powder according to any one of claims 1 to 9, **characterized in that** the steel powder consists of one or more 316L stainless steel powders.

11. A powder-based additive manufacturing process for the production of three dimensional objects by using heat, the process comprising the steps of (a) providing an additive manufacturing powder as defined in any one of claims 1 to 10, and (b) forming a composite three dimensional object by layer-wise heat melting and solidifying the additive manufacturing powder in an additive manufacturing apparatus.

12. The powder-based additive manufacturing process according to claim 11, wherein the process comprises a support-reduced forming of said composite three dimensional objects at a leaning angle between 90 degrees and 40 degrees or less, preferable at a leaning angle between 90 degrees and 20 degrees in respect of the printing plane.

13. The powder-based additive manufacturing process according to claim 11 or 12, wherein the additive manufacturing includes a process selected from the group consisting of: a powder-based laser melting process, an electron beam melting process, direct melting deposition, a diode beam melting process, a binder jetting process.

14. A diffusion bonding method for preparing an additive manufacturing powder having the secondary powder particles bound to the surface of the steel powder particles according to any one of claims 1 to 10, wherein the method comprises the consecutive steps of:
a) Providing a steel powder as defined in any one of claims 1 to 10 and providing a secondary powder as defined in any one of claims 1 to 10;
b) Mixing the steel powder with the secondary powder to obtain a powder mixture,
c) Preparing a powder bed of the powder mixture;
d) Heat treating the powder mixture in form of the powder bed under inert atmosphere or vacuum and in a temperature range between the temperature of activation of the diffusion between the steel powder particles and the secondary particles and activation of diffusion among the secondary particles for a period of time long enough to effect formation of diffusion bonding, wherein a heat-treated powder mixture comprising an additive manufacturing powder having the secondary powder particles bound to the surface of the steel powder particles is obtained;
e) Cooling the heat-treated powder mixture obtained in step d); and
f) Separating the additive manufacturing powder having the secondary powder particles bound to the surface of the steel powder particles from agglomerated steel powder particles having the secondary powder particles bound to the surface.

15. Use of an additive manufacturing powder according to any one claims 1 to 10 in additive manufacturing of three dimensional metal objects by means of a heat source, preferably in an additive manufacturing process selected from the group consisting of: a powder-based laser melting process, an electron beam melting process, direct melting deposition, a diode beam melting process, and a binder jetting process.

16. Use of an additive manufacturing powder in additive manufacturing of three dimensional metal objects by means of a heat source, wherein the additive manufacturing powder comprises a mixture of:
• a steel powder comprising steel powder particles, wherein the steel powder is selected from the group consisting of AISI 316 stainless steel powders, AISI 316L stainless steel powders, and combinations thereof; and
• a secondary powder comprising secondary powder particles, wherein the secondary powder is selected from the group consisting of elemental silicon powder, elemental molybdenum powder, elemental manganese powder, elemental chromium powder, elemental nickel powder and combinations thereof.

17. The use according to claim 15 or 16, **characterized in that** the additive manufacturing powder is used in an additive manufacturing process that comprises a support-reduced forming of the three dimensional metal objects at a leaning angle between 90 degrees and 40 degrees or less, preferable at a leaning angle between 90 degrees and 20 degrees in respect of the printing plane.
